# EUROPÄISCHE PATENTSCHRIFT

(11) **EP 0 628 584 B1**
(45) Veröffentlichungstag und Bekanntmachung des Hinweises auf die Patenterteilung: **10.12.1997**
(21) Anmeldenummer: 94108202.6
(22) Anmeldetag: 28.05.1994
(51) Int. Cl.: C08G 18/66, C08G 65/28

(54) **Verfahren zur Herstellung von Polyurethan Harschaumstoffen**
Process for the preparation of rigid polyurethane foams
Procédé pour la préparation de mousses rigides de polyuréthane

(30) Priorität: 08.06.1993 DE 4318962
(43) Veröffentlichungstag der Anmeldung: 14.12.1994
(73) Patentinhaber: BASF Aktiengesellschaft, 67063 Ludwigshafen (DE)
(72) Erfinder: Hinz, Werner, Dr., D-67227 Frankenthal (DE); Henn, Rolf, Dr., D-68775 Ketsch (DE); Keppeler, Uwe,Dr., D-67126 Hochdorf-Assemheim (DE); Guettes, Bernd, D-03238 Sallgast (DE)

(56) Entgegenhaltungen:
- EP-A- 0 320 134
- WO-A-86/02635
- WO-A-91/01342
- FR-A- 2 271 261

## Beschreibung

Gegenstand der Erfindung ist ein Verfahren zur Herstellung von Polyurethan-Hartschaumstoffen unter Verwendung niedrigviskoser Polyetherpolyole.

Die Herstellung von Polyurethan-Hartschaumstoffen durch Umsetzung von organischen Polyisocyanaten und/oder modifizierten organischen Polyisocyanaten mit höher funktionellen Verbindungen mit mindestens zwei reaktiven Wasserstoffatomen, beispielsweise Polyoxyalkylenpolyaminen und/oder vorzugsweise organischen Polyhydroxylverbindungen mit Molekulargewichten von z.B. 300 bis 2 000, und gegebenenfalls Kettenverlängerungs- und/oder Vernetzungsmitteln mit Molekulargewichten bis ungefähr 400 in Gegenwart von Katalysatoren, Treibmitteln, Hilfsmitteln und/oder Zusatzstoffen ist bekannt und wurde vielfach beschrieben. Eine zusammenfassende Übersicht über die Herstellung von Polyurethan-Hartschaumstoffen wird z.B. im Kunststoff-Handbuch, Band VII, "Polyurethane", 1. Auflage 1966, herausgegeben von Dr. R. Vieweg und Dr. A. Höchtlen und 2. Auflage, 1983, herausgegeben von Dr. G. Oertel (Carl. Hanser Verlag, München) gegeben.

Als Polyolkomponenten für Polyurethan-Hartschaumsysteme werden zumeist hoch funktionelle kurzkettige Polyetheralkohole mit einer hohen Hydroxylzahl eingesetzt. Die Herstellung derartiger Produkte erfolgt meist durch anionische Polymerisation niederer Alkylenoxide, zumeist 1,2-Propylenoxid, gegebenenfalls im Gemisch mit Ethylenoxid, an hoch-, zumeist mindestens 4-funktionelle Verbindungen mit aktiven Wasserstoffatomen. Gebräuchliche Startsubstanzen sind neben Aminen hoch funktionelle hydroxylgruppenhaltige Verbindungen, wie zum Beispiel Pentaerythrit, Sorbit, Mannit, Xylit, Glucose oder Sucrose.

Die aus nachwachsenden Rohstoffen gewonnene Sucrose wird aufgrund ihrer hohen Funktionalität von 8 sehr häufig als Startsubstanz für Hartschaumpolyetheralkohole eingesetzt. Neben ihrer hohen Funktionalität, welche die Herstellung hoch vernetzter Polyurethanteile ermöglicht, zeichnet sich Sucrose durch hohe Verfügbarkeit und einen niedrigen Preis aus. Da sie als Feststoff nur schwer mit Alkylenoxiden umsetzbar ist, wird sie zumeist gemeinsam mit anderen, bei der Alkoxylierungstemperatur flüssigen NH- und/oder insbesondere OH-funktionellen Verbindungen, sogenannten Co-Startern, umgesetzt.

Hierzu gibt es eine große Zahl von Veröffentlichungen im Stand der Technik, z.B. im Kunststoff-Handbuch, Band VII, "Polyurethane", 1. Auflage 1966, herausgegeben von Dr. R. Vieweg Dr. A. Höchtlen und 2. Auflage, 1983, herausgegeben von Dr. G. Oertel (Carl-Hanser Verlag, München), aber auch in der Patentliteratur, beispielhaft seien hier genannt DE-B 14 93 395, DE-B 11 76 358, DE-C 11 96 870, DE-B 12 10 554, DE-A 25 49 449 und DD-WP 136 833.

Da die üblicherweise eingesetzten flüssigen Co-Starter meist eine deutlich geringere Funktionalität als die Sucrose aufweisen, sinkt beim Einsatz großer Mengen an Co-Starter die Funktionalität der Polyetherole stark ab, und ein wesentlicher Vorteil des Sucrose-Einsatzes geht verloren. Beim Einsatz geringerer Mengen an Co-Startern bleibt zwar die Funktionalität der Polyetherole hoch, die Produkte weisen aber eine hohe Viskosität auf. Dieser Mangel ist zwar durch Einsatz größerer Alkylenoxidmengen teilweise zu beheben, die so hergestellten Produkte weisen jedoch eine geringe Hydroxylzahl auf und führen bei der Weiterverarbeitung zu Hartschäumen mit schlechteren mechanischen Eigenschaften, insbesondere ist die Durchhärtung mangelhaft.

Die bei der Alkoxylierung von Sucrose mit geringeren Mengen an Co-Startern auftretende erhöhte Viskosität der resultierenden Polyetherole konnte in der Vergangenheit toleriert werden, da die üblicherweise in Polyurethan-Hartschaumsystemen eingesetzten Treibmittel auf FCKW-Basis zu einer Viskositätssenkung der Polyolkomponente führten. Da derartige Treibmittel aus ökologischen Gründen in ihrem Einsatz stark zurückgehen, besteht die Notwendigkeit, Sucrose-gestartete Polyetherole bereitzustellen, die über eine hohe Funktionalität und eine hohe Hydroxylzahl bei gleichzeitiger geringer Viskosität verfügen.

Aufgabe der Erfindung war es daher, Polyurethan-Hartschäume zu entwickeln, die als Polyolkomponente Sucrose-gestartete Polyetherole mit niedriger Viskosität, hoher Funktionalität und hoher Hydroxylzahl enthalten, um bei guter Fließfähigkeit der Polyurethansysteme eine gute Durchhärtung zu erreichen.

Die Aufgabe konnte überraschenderweise gelöst werden durch ein Verfahren zur Herstellung von Polyurethan-Hartschaumstoffen durch Umsetzung von
a) organischen und/oder modifizierten organischen Polyisocyanaten mit
b) mindestens einer Verbindung mit zwei bis acht reaktiven Wasserstoffatomen mit einem Molekulargewicht von 300 bis 8000 und gegebenenfalls
c) Diole und/oder Triole mit einem Molekulargewicht von 60 bis 300
in Gegenwart von
d) Treibmitteln,
e) Katalysatoren sowie gegebenenfalls
f) Hilfsmitteln und/oder Zusatzstoffen,
wobei als Verbindungen mit zwei bis acht reaktiven Wasserstoffatomen mit einem Molekulargewicht von 300 bis 8000 (b) Polyoxypropylen-Polyole und/oder Polyoxyethylen-Polyoxypropylen-Polyole mit bis zu 20 Gew.-%, bezogen auf das Gewicht der Alkylenoxid-Einheiten, mittelständig gebundenen Oxyethyleneinheiten, mit sekundären Hydroxylgruppen, einer Funktionalität von 3,8 bis 4,1, einer Hydroxylzahl von 385 bis 410 mg KOH/g, einer Viskosität 1700 bis 2400 mPas bei 25°C, bestimmt nach DIN 51550 hergestellt durch anionische Polymerisation von 1,2-Propylenoxid und ggf. Ethylenoxid an eine Startermolekülmischung, bestehend aus Sucrose, Pentaerythrit und Diethylenglykol, eingesetzt werden.

Gegenstand der Erfindung ist demzufolge ein Verfahren zur Herstellung von Polyurethan-Hartschaumstoffen durch Umsetzung von
a) organischen und/oder modifizierten organischen Polyisocyanaten mit
b) mindestens einer Verbindung mit zwei bis acht reaktiven Wasserstoffatomen mit einem Molekulargewicht von 300 bis 8000 und gegebenenfalls
c) Diolen und/oder Triolen mit einem Molekulargewicht von 60 bis 300
in Gegenwart von
d) Treibmitteln,
e) Katalysatoren sowie gegebenenfalls
f) Hilfsmitteln und/oder Zusatzstoffen,
wobei als Verbindungen mit zwei bis acht reaktiven Wasserstoffatomen mit einem Molekulargewicht von 300 bis 8000 (b) Polyoxypropylen-Polyole und/oder Polyoxyethylen-Polyoxypropylen-Polyole mit bis zu 20 Gew.-%, bezogen auf das Gewicht der Alkylenoxid-Einheiten, mittelständig gebundenen Oxyethyleneinheiten, mit sekundären Hydroxylgruppen, einer Funktionalität von 3,8 bis 4,1, einer Hydroxylzahl von 385 bis 410 mg KOH/g, einer Viskosität 1700 bis 2400 mPas bei 25°C, bestimmt nach DIN 51550 hergestellt durch anionische Polymerisation von 1,2-Propylenoxid und ggf. Ethylenoxid an eine Startermolekülmischung, bestehend aus Sucrose, Pentaerythrit und Diethylenglykol, eingesetzt werden.

Die Startsubstanzmischung setzt sich vorteilhafterweise zusammen aus 12 bis 18 Gew.-% Sucrose, 4 bis 7 Gew.-% Pentaerythrit und 8 bis 11 Gew.-% Diethylenglykol, jeweils bezogen auf das Gesamtgewicht des Polyetheralkohols.

In einer vorteilhaften Ausführungsform wird zunächst aus Pentaerythrit, Diethylenglykol und wäßriger Kaliumhydroxydlösung unter vollständiger Entfernung des Reaktionswasser das Alkoholat gebildet, danach die Sucrose zugegeben, bis zur vollständigen Homogenisierung der Sucrose intensiv vermischt und erst dann das so erhaltene Startergemisch mit Alkylenoxid umgesetzt.

Daß durch den Einsatz erfindungsgemäß verwendeten Polyetheralkohle das Ziel der Erfindung gelöst werden konnte, war überraschend. Man hätte vielmehr erwarten müssen, daß bei gemeinsamer Alkoxylierung der Feststoffe Sucrose und Pentaerythrit trotz Mitverwendung des flüssigen Co-Starters Diethylenglykol ebenfalls hochviskose Produkte entstehen würden bzw. bei hohen Diethylenglykol-Anteilen mögliche niederviskose Polyetherole wiederum zu Polyurethan-Hartschäumen mit verschlechterten mechanischen Eigenschaften führen würden.

Überraschenderweise weisen diese Produkte jedoch bei Hydroxylzahlen um 400 und Funktionalitäten um 4 lediglich Viskositäten im Bereich von 200 mPa·s bei 25°C auf. Nur unter Verwenudng der erfindungsgemäßen neuen Polyetherole lassen sich Polyurethan-Hartschäume herstellen, welche ausgezeichnetes Fließverhalten mit optimaler Durchhärtung, d.h. optimaler Entformbarkeit der Polyurethan-Teile verbinden.

Aufgrund dieser Eigenschaften können aus diesen Produkten auch bei Verzicht auf FCKW und sogar bei alleiniger Verwendung von Wasser als Treibmittel Polyurethan-Hartschäume mit sehr guten mechanischen Eigenschaften hergestellt werden.

Die Herstellung der erfindungsgemäß eingesetzten Polyetheralkohole erfolgt nach dem allgemein bekannten Mechanismus der basisch katalysierten Alkylenoxidanlagerung an OH-funktionelle Startsubstanzen, beschrieben z.B. in Robert Becker, "Polyurethane", Fachbuchverlag Leipzip, 1973.

Hierbei wird die Startsubstanzmischung mit dem basischen Katalysator, wobei hierzu Amine, bevorzugt jedoch Alkali- und/oder Erdalkalimetallhydroxide und/oder deren basischen Salze, insbesondere Kaliumhydroxid, eingesetzt werden, versetzt und dazu bei den üblichen Temperaturen, meist im Bereich von etwa 80 bis 150°C, die Alkylenoxide, insbesondere Propylenoxid, gegebenenfalls gemeinsam mit bis zu 20 Gew.-% der Alkylenoxidmenge an Ethylenoxid, zudosiert.

Zur Verhinderung von Nebenreaktionen sowie aus Sicherheitsgründen sollte der Reaktor vor der Alkylenoxidzugabe mit Stickstoff gespült werden.

Zur Unterdrückung der Bildung von niedermolekularen Diolen ist es günstig, zunächst das Pentaerythrit und das Diethylenglykol mit dem basischen Katalysator zum Alkoholat umzusetzen und während der Alkoholatbildung das entstehende Reaktionswasser bei vermindertem Druck destillativ aus dem Reaktionsgemisch zu entfernen. Die Reaktionstemperatur sollte dabei im Bereich von 80 bis 100°C und der Druck im Bereich von 25 mbar liegen. In das so hergestellte Alkoholat wird die Sucrose eingebracht, die Mischung homogenisiert und anschließend mit Alkylenoxiden umgesetzt. Es ist vorteilhaft, die Dosierung des Alkylenoxids erst nach vollständiger Homogenisierung der Startsubstanzmischung zu beginnen. Dazu sollte das Startergemisch nach beendeter Sucrosezugabe mindestens 1 Stunde bei Temperaturen bis maximal 70°C, vorzugsweise bei Raumtemperatur, intensiv gerührt werden. Im Anschluß an die Alkylenoxiddosierung wird zum vollständigen Umsatz des Alkylenoxids eine Nachreaktionsphase angeschlossen.

Danach wird der basische Katalysator wie üblich neutralisiert und entfernt. Das kann durch Neutralisation mit Säuren bzw. sauren Salzen erfolgen, möglich ist auch der Zusatz von Adsorptionsmitteln, z.B. Alumosilikaten. Die Feststoffe werden üblicherweise durch Druckfiltration oder Zentrifugieren entfernt.

Danach folgt üblicherweise eine Vakuumdestillation bei ca. 1 mbar und ca. 100°C zur Entfernung des Wassers und anderer leichtflüchtiger Bestandteile.

Zur Stabilisierung gegen thermooxidativen Abbau wird der Fertigpolyetheralkohol zumeist mit Stabilisatoren, z.B. sterisch gehinderten Phenolen, versetzt.

Die Herstellung der Polyurethan-Hartschaumstoffe erfolgt durch Umsetzung in an sich bekannter Weise von
a) organischen und/oder modifizierten organischen Polyisocyanaten mit
b) den erfindungsgemäßen Polyetheralkoholen, gegebenenfalls gemeinsam mit anderen höhermolekularen Verbindungen mit mindestens zwei reaktiven Wasserstoffatomen
c) niedermolekularen Kettenverlängerungs- und/oder Vernetzungsmitteln
in Gegenwart von
d) Treibmitteln sowie von
e) Katalysatoren und gegebenenfalls
f) üblichen weiteren Hilfsmitteln und/oder Zusatzstoffen.

Zur Herstellung der Polyurethan-Hartschaumstoffe nach dem erfindungsgemäßen Verfahren finden die an sich bekannten Aufbaukomponenten Verwendung, zu denen im einzelnen folgendes auszuführen ist.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich als organische Polyisocyanate und kommen daher vorzugsweise zur Anwendung: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.
b) Neben den erfindungsgemäß verwendeten Polyetherolen können weitere höhermolekulare Verbindungen mit zwei bis acht reaktiven Wasserstoffatomen vorzugsweise 2 bis 6, und einem Molekulargewicht von 300 bis 8000, vorzugsweise von 300 bis 3000 verwendet werden. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 150 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/ oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die Polyurethan-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
d) Als Treibmittel können die aus der Polyurethanchemie allgemein bekannten Fluorchlorkohlenwasserstoffe sowie hoch- und/ oder perfluorierte Kohlenwasserstoffe verwendet werden. Der Einsatz dieser Stoffe wird jedoch aus ökologischen Gründen stark eingeschränkt bzw. ganz eingestellt.
   Als Alternative bieten sich z.B. aliphatische und/oder cycloaliphatische Kohlenwasserstoffe, insbesondere das Cyclopentan an.
   Diese Kohlenwasserstoffe werden üblicherweise, gegebenenfalls in Verbindung mit hoch- und/oder perfluorierten Kohlenwasserstoffen, in Form einer Emulsion der Aufbaukomponente (b) zugegeben. Als Emulgatoren üblicherweise eingesetzt werden oligomere Acrylate, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. aus EP-A 351 614.
   Die eingesetzte Menge des Treibmittels bzw. der Treibmittelmischung liegt dabei bei 2 bis 25 Gew.-%, vorzugsweise 5 bis 15 Gew.-%, die des Emulgators bei 0,01 bis 6 Gew.-%, jeweils bezogen auf die Aufbaukomponente (b).
   Weiterhin ist es möglich, als Treibmittel der Aufbaukomponente (b) Wasser in einer Menge von 0,5 bis 5 Gew.-%, bezogen auf die Aufbaukomponente (b), zuzusetzen. Der Wasserzusatz kann auch in Kombination mit dem Einsatz der anderen beschriebenen Treibmittel erfolgen.
e) Als Katalysatoren (e) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
f) Der Reaktionsmischung zur Herstellung der Polyurethan-Hartschaumstoffe können gegebenenfalls auch noch Hilfsmittel und/ oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der Polyurethan-Hartschaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Polyurethan-Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Die Polyurethan-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung kann, wie bereits dargelegt wurde,mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Die nach dem erfindungsgemäßen Verfahren hergestellten Polyurethan-Hartschaumstoffe oder Hartformschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

### Beispiele

### Herstellung von Polyoxyalkylen-polyolen

### Beispiel 1

In einem 10 l-Rührautoklaven wurden 334 g Pentaerythrit, 522 g Diethylenglykol und 37 g wäßrige Kaliumhydroxidlösung (47 %) vorgelegt und bei 90°C und reduziertem Druck (25 mbar) während 1 Stunde das Alkoholat gebildet. Nach Druckausgleich mit Stickstoff und Absenkung der Temperatur auf 60°C wurde unter konstantem Stickstoffstrom langsam 841 g Sucrose zugegeben und 1 Stunde gerührt. Anschließend wurde die Reaktortemperatur auf 110°C erhöht und mit konstanter Geschwindigkeit während 6 Stunden 3823 g Propylenoxid zudosiert. Nach einer Abreaktionsphase von 3 Stunden wurden alle Restmonomere unter reduziertem Druck entfernt (1 mbar, 30 Minuten, 110°C) und zur Entfernung des Katalysators 50 g Wasser und 200 g Adsorptionsmittel (synthetisches Magnesium-Aluminium-Silikat) zugegeben. Nach einer Rührzeit von 2 Stunden wurden die Feststoffe durch Druckfiltration entfernt und der Polyetherol bei reduziertem Druck entwässert (1 mbar, 2 Stunden, 100°C). Zur Stabilisierung wurden anschließend 7,5 g Di-tert.-butyl-p-kresol im fertiggestellten Polyetherol gelöst und das Produkt homogenisiert. Das so erhaltene Produkt besaß eine Hydroxyl-Zahl von 400 mg KOH/g, eine Viskosität 1850 mPas, einen Restwassergehalt von 0,02 Gew.-%, bezogen auf das Polyetherolgewicht sowie eine Funktionalität von 3,9.

### Beispiel 2 (Vergleich)

In einem 10 l-Rührautoklaven wurden 684 g Sucrose, 272 g Pentaerythrit, 298 g Diethylenglykol und 37 g wäßrige Kaliumhydroxidlösung (47 %) unter Stickstoff gemischt und anschließend bei 110°C während 6 Stunden 4328 g Propylenoxid zugefahren. Nach einer Abreaktionsphase von 3 Stunden wurden alle Restmonomere unter reduziertem Druck entfernt (1 mbar, 30 Minuten, 110°C) und zur Entfernung des Katalysators 50 g Wasser und 200 g Adsorptionsmittel zugegeben. Nach einer Rührzeit von zwei Stunden wurden die Feststoffe durch Druckfiltration entfernt und der Polyetherol bei reduziertem Druck entwässert (1 mbar, 2 Stunden, 100°C). Zur Stabilisierung wurden anschließend 7,5 g Di-tert.-butyl-p-kresol im fertiggestellten Polyetherol gelöst und das Produkt homogenisiert. Man erhielt ein Produkt mit einer Hydroxyl-Zahl 297 mg KOH/g, einer Viskosität 1320 mPas bei 25°C, einem Restwassergehalt von 0,035 Gew.-%, bezogen auf das Polyetherolgewicht und einer Funktionalität von 4,3.

### Beispiel 3 (Vergleich)

Aus 787 g Sucrose, 312 g Pentaerythrit, 345 g Diethylenglykol, 36,7 g wäßriger Kaliumhydroxidlösung (47 %) und 4070 g Propylenoxid wurde nach dem im Vergleichsbeispiel 1 beschriebenen Verfahren ein Polyetherpolyol erhalten mit einer Hydroxyl-Zahl 350 mg KOH/g, einer Viskosität von 1990 mPas bei 25°C, einem Restwassergehalt von 0,02 Gew.-%, bezogen auf das Polyetherolgewicht und einer Funktionalität von 4,3.

### Beispiel 4 (Vergleich)

Aus 841 g Sucrose, 335 g Pentaerythrit, 241 g Diethylenglykol, 36,9 g wäßriger Kaliumhydroxidlösung (47 %) und 4075 g Propylenoxid wurde nach dem im Vergleichsbeispiel 1 beschriebenen Verfahren ein Polyetherpolyol erhalten mit einer Hydroxyl-Zahl 343 mg KOH/g, einer Viskosität von 2630 mPas bei 25°C, einem Restwassergehalt von 0,015 Gew.-%, bezogen auf das Polyetherolgewicht und einer Funktionalität von 4,7.

### Beispiel 5 (Vergleich)

Aus 855 g Sucrose, 345 g Glyzerin, 311 g Diethylenglykol, 16,7 g wäßriger Kaliumhydroxidlösung (47 %) und 3999 g Propylenoxid wurde nach dem im Vergleichsbeispiel 1 beschriebenen Verfahren ein Polyetherpolyol erhalten mit einer Hydroxyl-Zahl 381 mg KOH/g, einer Viskosität von 2670 mPas bei 25°C, einem Restwassergehalt von 0,02 Gew.-%, bezogen auf das Polyetherolgewicht und einer Funktionalität von 4,0.

### Beispiel 6 (Vergleich)

Aus 1039 g Sucrose, 257 g Glyzerin, 334 g Diethylenglykol, 18,0 g wäßriger Kaliumhydroxidlösung (47 %) und 3877 g Propylenoxid wurde nach dem im Vergleichsbeispiel 1 beschriebenen Verfahren ein Polyetherpolyol erhalten mit einer Hydroxyl-Zahl 384 mg KOH/g, einer Viskosität von 3130 mPas bei 25°C, einem Restwassergehalt von 0,02 Gew.-%, bezogen auf das Polyetherolgewicht und einer Funktionalität von 4,3.

### Beispiel 7 (Vergleich)

Aus 1368 g Sucrose, 616 g Diethylenglykol, 41,1 g wäßriger Kaliumhydroxidlösung (47 %) und 4166 g Propylenoxid wurde nach dem im Vergleichsbeispiel 1 beschriebenen Verfahren ein Polyetherpolyol erhalten mit einer Hydroxyl-Zahl 453 mg KOH/g, einer Viskosität von 4390 mPas bei 25°C, einem Restwassergehalt von 0,01 Gew.-%, bezogen auf das Polyetherolgewicht und einer Funktionalität von 4,4.

### Beispiel 8 (Vergleich)

Aus 1026 g Sucrose, 934 g Diethylenglykol, 39,2 g wäßriger Kaliumhydroxidlösung (47 %) und 3900 g Propylenoxid wurde nach dem im Vergleichsbeispiel 1 beschriebenen Verfahren ein Polyetherpolyol erhalten mit einer Hydroxyl-Zahl 458 mg KOH/g, einer Viskosität von 1210 mPas bei 25°C, einem Restwassergehalt von 0,02 Gew.-%, bezogen auf das Polyetherolgewicht und einer Funktionalität von 3,5.

### Beispiel 9 (Vergleich)

Aus 912 g Sucrose, 404 g Diethylenglykol, 37,7 g wäßriger Kaliumhydroxidlösung (47 %) und 4150 g Propylenoxid wurde nach dem im Vergleichsbeispiel 1 beschriebenen Verfahren ein Polyetherpolyol erhalten mit einer Hydroxyl-Zahl 305 mg KOH/g, einer Viskosität von 1630 mPas bei 25°C, einem Restwassergehalt von 0,013 Gew.-%, bezogen auf das Polyetherolgewicht und einer Funktionalität von 4,4.

### Beispiel 10 (Vergleich)

Aus 771 g Sucrose, 191 g Glyzerin, 18,0 g wäßriger Kaliumhydroxidlösung (47 %), 35,3 g Wasser und 4168 g Propylenoxid wurde nach dem im Vergleichsbeispiel 1 beschriebenen Verfahren ein Polyetherpolyol erhalten mit einer Hydroxyl-Zahl 335 mg KOH/g, einer Viskosität von 1715 mPas bei 25°C, einem Restwassergehalt von 0,01 Gew.-%, bezogen auf das Polyetherolgewicht und einer Funktionalität von 4,3.

Die Bestimmung der OH-Zahl erfolgte nach DIN 53 240, die der Viskosität nach DIN 51 550, die des Wassergehaltes nach DIN 51 777.

### Beispiel 11 bis 16

### Herstellung der Urethangruppen enthaltenden Hartschaumstoffe

Aus 100 g Hartschaumpolyol, 1,0 g Schaumstabilisator auf Silikonbasis, verwendet wurde Polyurax SR 321, Fa. BP Chemicals, 1,4 g N,N,N',N'-Tetramethylhexamethylendiamin und 4,5 g Wasser wurde eine Polyolkomponente hergestellt. Diese wurde mit einer Isocyanatkomponente zu einem Polyurethan-Hartschaum verschäumt.

Als Isocyanatkomponente wurde eine Mischung aus Diphenylmethandiisocyanaten und Polyphenyl-polymethylen-polyisocyanaten mit einem NCO-Gehalt von 31 Gew.-%, bezogen auf die Isocyanatkomponente, und einer Viskosität von 200 mPa·s bei 23°C eingesetzt.

Zur Verschäumung wurde die oben beschriebene Polyolkomponente mit den in der Tabelle 1 angegebenen Mengen der Isocyanatkomponente zur Reaktion gebracht.

Dazu wurden beide Komponenten auf 23°C temperiert, bei 23°C 10 Sekunden lang mittels eines Rührers bei 1200 Upm intensiv vermischt, die Reaktionsmischung in einen Polystyrolbecher mit 1,1 1 Volumen eingefüllt und dort aufschäumen gelassen.

An den so hergestellten Urethangruppen enthaltenden Hart schaumstoffen wurden bestimmt:
- die Start- und Abbindezeiten,
- die Gesamtdichte nach DIN 53 420,
- die Abbindehöhe mit einem Luftschall-Abstandsmeßgerät LAM 80 der Firma Krautkrämer, Burgwedel, BRD,
- die Zunahme der Druckfestigkeit als Funktion der Zeit mit einem Zug/Druckprüfgerät T2001 der Firma Lloyd Instruments, Offenbach, BRD.

Parallel dazu wurden die jeweils vierfache Mengen der Polyol- und der Isocyanatkomponente unter den angegebenen Bedingungen gemischt und die Reaktionsmischung in einem Karton mit den Abmessungen 20x20x20 cm frei aufschäumen gelassen.

An dem auf diese Weise hergestellten Polyurethan-Hartschaumstoff wurde nach 24-stündiger Lagerung bei Raumtemperatur die Druckfestigkeit nach DIN 53 421 bestimmt.

Die Fließfähigkeit wurde in einer üblichen Fließform mit einem Rohrdurchmesser von 42 mm bestimmt, die Einwaage der Komponenten A und B betrug dabei 100 g.

Die Ergebnisse sind aus der Tabelle ersichtlich.

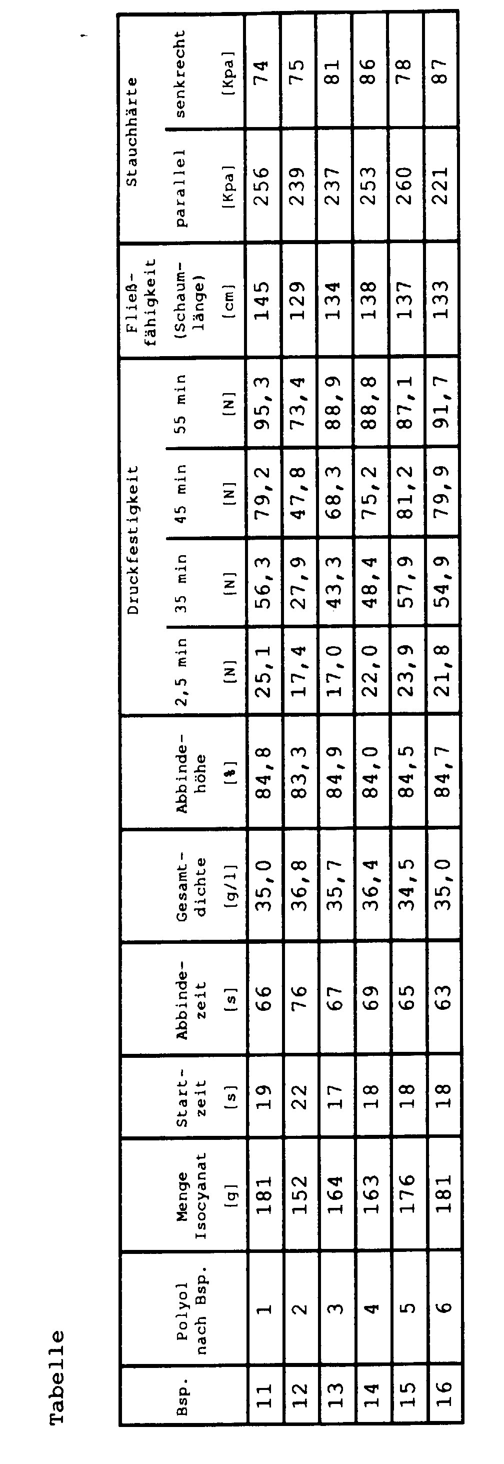

## Patentansprüche

1. Verfahren zur Herstellung von Polyurethan-Hartschaumstoffen durch Umsetzung von
a) organischen und/oder modifizierten organischen Polyisocyanaten mit
b) mindestens einer Verbindung mit zwei bis acht reaktiven Wasserstoffatomen mit einem Molekulargewicht von 300 bis 8000 und gegebenenfalls
c) Diole und/oder Triole mit einem Molekulargewicht von 60 bis 300
in Gegenwart von
d) Treibmitteln,
e) Katalysatoren sowie gegebenenfalls
f) Hilfsmitteln und/oder Zusatzstoffen,
wobei als Verbindungen mit zwei bis acht reaktiven Wasserstoffatomen mit einem Molekulargewicht von 300 bis 8000 (b) Polyoxypropylen-Polyole und/oder Polyoxyethylen-Polyoxypropylen-Polyole mit bis zu 20 Gew.-%, bezogen auf das Gewicht der Alkylenoxid-Einheiten, mittelständig gebundenen Oxyethyleneinheiten, mit sekundären Hydroxylgruppen, einer Funktionalität von 3,8 bis 4,1, einer Hydroxylzahl von 385 bis 410 mg KOH/g, einer Viskosität 1700 bis 2400 mPas bei 25°C, bestimmt nach DIN 51550 hergestellt durch anionische Polymerisation von 1,2-Propylenoxid und ggf. Ethylenoxid an eine Startermolekülmischung, bestehend aus Sucrose, Pentaerythrit und Diethylenglykol, eingesetzt werden.

2. Verfahren nach Anspruch 1, dadurch gekennzeichnet, daß sich die Startermolekülmischung aus, bezogen auf das Gesamtgewicht des Polyoxyalkylenpolyols, 12 bis 18 Gew.-% Sucrose, 4 bis 7 Gew.-% Pentaerythrit und 8 bis 11 Gew.-% Diethylenglykol, zusammensetzt.

3. Verfahren nach einem der Ansprüche 1 oder 2, dadurch gekennzeichnet, daß aus Pentaerythrit, Diethylenglykol und dem alkalischen Katalysator unter vollständiger Entfernung des Reaktionswassers zunächst das Alkoholat gebildet, die Sucrose zugegeben, vollständig homogenisiert und erst dann das so entstandene Startergemisch mit Alkylenoxid umgesetzt wird.

## Claims

1. A process for the production of rigid polyurethane foams by reacting
a) organic and/or modified organic polyisocyanates with
b) at least one compound containing from two to eight-reactive hydrogen atoms and having a molecular weight of from 300 to 8000, and, if desired,
c) diols and/or triols having a molecular weight of from 60 to 300
in the presence of
d) blowing agents,
e) catalysts and, if desired,
f) assistants and/or additives,
where the compounds (b) containing from two to eight reactive hydrogen atoms and having a molecular weight of from 300 to 8000 are polyoxypropylene-polyols and/or polyoxyethylene-polyoxypropylene-polyols containing up to 20 % by weight, based on the weight of the alkylene oxide units, of pendant oxyethylene units containing secondary hydroxyl groups and having a functionality of from 3.8 to 4.1, a hydroxyl number of from 385 to 410 mg of KOH/g and a viscosity of from 1700 to 2400 mPa·s at 25°C, determined in accordance with DIN 51550, and which are prepared by anionic polymerization of 1,2-propylene oxide and, if-desired, ethylene oxide on an initiator molecule mixture comprising sucrose, pentaerythritol and diethylene glycol.

2. A process as claimed in claim 1, wherein the initiator molecule mixture comprises, based on the total weight of the polyoxyalkylene-polyol, from 12 to 18 % by weight of sucrose, from 4 to 7 % by weight of pentaerythritol and from 8 to 11 % by weight of diethylene glycol.

3. A process as claimed in claim 1 or 2, wherein the alkoxide is first formed from pentaerythritol, diethylene glycol and the alkaline catalyst with complete removal of the water of reaction, the sucrose is then added, the mixture is fully homogenized, and only then is the resultant initiator mixture reacted with alkylene oxide.

## Revendications

1. Procédé pour la préparation de mousses rigides de polyuréthane par réaction de
a) polyisocyanates organiques et/ou organiques modifiés avec
b) au moins un composé avec deux à huit atomes d'hydrogène réactionnels, avec une masse moléculaire de 300 à 8.000, et éventuellement
c) des diols et/ou des triols avec une masse moléculaire de 60 à 300
en présence
d) d'agents d'expansion,
e) de catalyseurs, de même qu'éventuellement
f) d'adjuvants et/ou d'additifs,
en utilisant à titre de composés avec deux à huit atomes d'hydrogène réactionnels avec une masse moléculaire de 300 à 8.000 (b) des polyoxypropylène-polyols et/ou des polyoxyéthylène-polyoxypropylène-polyols avec jusqu'à 20 % en poids, par rapport à la masse des unités d'oxyde d'alkylène, des unités d'oxyde d'éthylène liées au centre, avec des groupes hydroxyles secondaires, une fonctionnalité de 3,8 à 4,1, un nombre hydroxyle de 385 à 410 mg de KOH/g, une viscosité de 1.700 à 2.400 mPas à 25°C, déterminée suivant la norme DIN 51.550, préparés par polymérisation anionique d'oxyde de 1,2-propylène et éventuellement d'oxyde d'éthylène sur un mélange de molécules d'initiation, constitué de saccharose, de pentaérythritol et de diéthylèneglycol.

2. Procédé selon la revendication 1, caractérisé en ce que le mélange de molécules d'initiation est composé, par rapport à la masse totale du polyoxyalkylènepolyol, de 12 à 18 % en poids de saccharose, de 4 à 7 % en poids de pentaérythritol et de 8 à 11 % en poids de diéthylèneglycol.

3. Procédé selon l'une des revendications 1 ou 2, caractérisé en ce qu'on forme d'abord l'alcoolat à partir du pentaérythritol, du diéthylèneglycol et du catalyseur alcalin tout en éliminant complètement l'eau de réaction, en ce qu'on ajoute le saccharose, en ce qu'on procède à l'homogénéisation complète et en ce qu'on ne fait réagir qu'ensuite le mélange d'initiation ainsi formé avec l'oxyde d'alkylène.
